# EUROPEAN PATENT SPECIFICATION

(11) **EP 1 100 865 B1**
(45) Date of publication and mention of the grant of the patent: **19.11.2003**
(21) Application number: 99935723.9
(22) Date of filing: 20.07.1999
(51) Int. Cl.: C12C 3/00, B07B 1/22

(54) **PROCESS AND APPARATUS FOR OBTAINING LUPULIN PRODUCTS FROM HOPS**
VERFAHREN UND VORRICHTUNG ZUR GEWINNUNG VON LUPULINPRODUKTEN AUS HOPFEN
PROCEDE ET DISPOSITIF SERVANT A EXTRAIRE DU LUPULIN DEPUIS DES CONES DE HOUBLON

(30) Priority: 29.07.1998 US 126495
(43) Date of publication of application: 23.05.2001
(73) Proprietor: Rigby, Francis Lloyd, Yakima, WA 98908 (US)
(72) Inventor: Rigby, Francis Lloyd, Yakima, WA 98908 (US)
(74) Representative: Dean, John Paul
(86) International application number: US9916367
(87) International publication number: WO00006691

(56) References cited:
- DE-A- 19 523 705
- DE-C- 4 205 021
- GB-A- 1 166 386
- GB-A- 1 411 074
- GB-A- 2 000 854
- US-A- 3 275 447
- US-A- 4 053 653
- US-A- 4 440 637

## Description

### TECHNICAL FIELD

The invention relates to a process and apparatus for the physical separation of lupulin from hops, and more particularly to a process and apparatus that obtains lupulin-rich brewing products from hops by utilizing a physical separation process and apparatus rather than chemical extraction techniques.

### BACKGROUND OF THE INVENTION

Hops, *Humulus lupulus*, were first employed in the brewing of beer in medieval times because it was discovered that the addition of hops to the brew prevented the beer from going sour. This was because the hop's lupulin glands contain very powerful antibiotics, which are particularly effective against acid forming bacteria. These antibiotic substances also have a unique bitter flavor and their addition to the brew ultimately became the characteristic flavor of malt beverages.

In the evolution of the hop plant these antibiotics served to insure the survival of the species. The hop plant is bisexual and only the flowers (strobiles or cones) of the female plant contain a significant amount of lupulin and are useful in brewing. In the natural state the female flowers contain a seed at the base of each bract, along with the lupulin. However the seeds are undesirable in brewing and commercial hops are grown seedless by eliminating all male plants from the field. Even without being pollinated, the female flower continues to produce lupulin. In the natural state, as the hop cones mature they dry in the sun and wind and open up like a fully bloomed rose. The seed together with the lupulin falls to the ground and it is there that the lupulin plays its role. The contained antibiotics suppress the growth of soil organisms which would attack the germinating seed; a process known to botanists as "damping off". The release of lupulin is also aided by the autumn frosts.

The modem brewing industry relies upon flavorings obtained from the hop plant and specifically derived from the mature cones of the female hop plant. These hop flavorings, in their commercially viable forms are commonly described as hop extracts, usually produced through solvent extraction processes. Considered benign to the consumer, supercritical carbon dioxide is a preferred solvent. Besides carbon dioxide, other solvents have been employed to extract the essential oil components from the hop. However, most of these other solvents leave behind undesirable residues, which the typical consumer wishes to avoid and as a result many breweries now prohibit.

Hop extracts includes alpha acids, which are a valued component of the extract that contributes to the characteristic hop bitters flavoring in beer. Commonly utilized solvents extract about 90% to 95% of the alpha acid content of the hops and the alpha acid content of the extract, after removing the solvent, ranges from about 40% to 60%, by weight.

These conventional hop extracts are quite expensive to produce. The carbon dioxide extraction process requires the construction of costly facilities. Additionally, a high degree of technical expertise is needed to produce a quality hop extract via supercritical carbon dioxide extraction methods.

In almost all other materials on which solvent extraction is used, the extractive exists in essentially a uniform molecular dispersion throughout the tissue, such as copra, soybeans and peanuts and other agricultural products. Solvent extraction is a logical and efficient means of extracting substances that exist in essentially homogenous concentrations in their raw, parent substances. However, in hops, the alpha acids along with other resin acids and essential oils reside in unique, small acorn-shaped capsules, called lupulin glands. The lupulin glands are each attached by a microscopically short and fragile stem to the inner surfaces of the bracts and bractcoles, which are the petal-like structures of the hop cone.

It is well known that besides the resinous alpha acids, the lupulin gland also contains substantially all of the resins and essential oils that give the hop its characteristic odor. Therefore, the contents of the lupulin glands are the desired product of these conventional extraction processes. The lupulin gland is typically yellow in color, with a flour-like constancy in bulk form. Being that the lupulin gland encapsulates the desired flavoring component of the hop plant, there is a significant potential advantage of physically separating lupulin glands from hops.

The harvest of hops begins in the field, where the hop vines are cut and then the cones stripped from the vines. Freshly picked hop cones contain about 70% moisture and will spoil rapidly if not dried or frozen. Current preservation practices include drying the hop cones in a hop kiln immediately after harvest. Within the hop kiln, the hop cones are spread onto a porous, screen-type flooring, typically to form a bed of hop cones with depth of approximately 30 inches (76 cm). The hop cones are then dried with warm air supplied at a temperature of approximately 130 to 150 degrees F (54 to 66 °C). The warm air is fed upward through the hop bed from a plenum chamber below.

The inventor of the present invention observed that the hop cones in the top three or four inches of the kiln's hop bed open up as they dry, forming a loose and fragile structure that discloses the lupulin attached to the interior surfaces of the hop cone. In contrast, the hop cones at the bottom of the hop bed were compressed by the weight of the hop cones above. As a result, at the completion of the drying process, this bottom layer of hop cones is relatively tight and flattened, while the top layer is loose and brittle. This conventional drying practice, though accepted for normally processed hops, produces inconsistent and poor quality raw product for subsequent lupulin separation processes.

Prior apparatus and methods suggest that lupulin glands can be separated from the hop cone with a small degree of efficiency. Specifically, in solvent extraction, an extraction yield of 90% to 95% of the alpha acid is often achieved. Additionally, the alpha acid content in the extraction products can be as high as 40% to 60%. These high levels of yield efficiency and resultant product potency or purity are desirable for an optimum realization of the benefits of extracts.

Prior physical lupulin separation techniques have not succeed in simultaneously providing high yield and high potency. This is because the attempts to achieve high yield have entailed physical treatments which are too harsh and produce too much fine particulate non-lupulin material. Several patents have been issued, both in the United States and world-wide, which describe processes for this purpose. However, none of these patent references achieve the yield and potency of products obtained by solvent extraction.

As an example, U.S. Patent 3,275,447 to Mueller describes a process which consists of grinding the hops in a hammer mill and forcing the lupulin, together with finely broken hop material, through a rotary sifter containing rapidly rotating beater bars. The rotary sifter includes a very fine sieve of 100 to 200 mesh. Examination of the screened material produced by the Mueller '447 process, by means of a microscope, shows that despite the cold temperature of the system, considerable deformation ofthe lupulin occurs. Additionally, nonlupulin particulate matter adheres to the bruised and blistered lupulin. A yield of alpha acids of approximately 96% is claimed but the enrichment factor is only about two, that is the concentration of lupulin in the product is only twice as high as that found in the unprocessed hops. The defect in this procedure is again the use of harsh procedures for disintegration of the hops.

The specifications of Miyata and Kikuchi, US Patents 4,051,771 and 4,053,653 are additional examples of treatments which are too harsh. They use "crushers" or "hammer mills", as well as rotary air locks and screw conveyors, all of which create a lot of non-lupulin finely broken material. The data are presented in a format which makes interpretation difficult, but a careful study of the data in the example given, reveals that they obtained a product containing approximately 13% alpha acids which is an enrichment factor of 2.3. Elsewhere in the specifications the enrichment factor appears to be 2.5. This is not commercially competitive with solvent extacts.

Customarily after harvest, loose dried hops are highly compressed into bales to reduce the volume for shipping and storage. This compression is extremely damaging to the lupulin glands of the hop cones. The ambient temperature at harvesting time is usually quite high and the lupulin glands are consequently soft and easily broken. When this occurs, the liquid content of the glands leak into the surrounding cellulosic tissue and the unsaturated chemical linkages in the bitter acids and oils rapidly undergo oxidation. This is accompanied by the evolution of heat, and is commonly described by hop growers and handlers as the "sweat period". The stored bales are always spaced a few centimetres (inches) apart to allow the heat to escape. Substantial loss of the valuable alpha add is irretrievable. With conventional hop bales held in storage prior to processing, the loss of alpha acid continues due to oxidation but at a diminished rate. This loss is usually estimated by processors to be about 0.1 percentage points per month of storage. A process is needed that better preserves the contents of the hop cone's lupulin glands after harvest, especially the alpha acids.

In May of 1988, the inventor of the present invention presented a paper at the Australian Institute of Brewing Convention. The inventor's May'88 paper disclosed a mild threshing and sifting procedure for physically separating lupulin from hop cones, prior to bailing or pressing the hop cones. The process of the May '88 paper was performed at temperatures approximately near 3 °C (37°F). The inventor reported lupulin yields of over 75% in two out of six varieties of unpressed hops after a single pass through simple equipment.

The inventor also reported in the May '88 paper that a double pass of a sample of Nugget variety hops yielded 85% of the alpha acids present in the hops and a resultant lupulin product containing 41.7% alpha acids. However, the inventor noted significant sacrifices in purity in this second pass. A process is needed that can employ physical methods to separate substantially all of the lupulin glands from hop cones to form a substantially pure product.

Regarding the low temperature processing of lupulin, many references recognizes the necessity of chilling the hops to harden the lupulin so that the hops can be broken up and screened in a non-sticky condition. An example of the shortcomings in present chilled hop separation technology, the Natz, U S Patent 2,833,652 teaches the freezing of vine-fresh hops. The Natz 652 process results in extensive formation of ice crystals which give a wet product of unsatisfactory yield.

Another low temperature separation process for hops is disclosed in British Patent 1,411,074 to Miyata and Kikuchi. A lupulin rich product is obtained therein by freezing the hops and then breaking them down with a hammer mill. The pieces of broken hop cones are then passed through a shaking screen while an air stream is passed up through the screen. This process produces significant quantities of fine particulate. The use of a hammer mill to pulverize the hard frozen cones damages the lupulin, reducing yield. The use of negative forced air through the shaking screen also presents processing problems. A fluidized "flotation state" is difficult to maintain over the screen, especially with the sticky hammer milled hop.

Also observed as unsatisfactory is the U.S. Patent No. 3,271,162 to Bishop. Bishop '162 utilizes a "pin mill" and "turbo sifter", both of which give rise to excessive non-lupulin fines in the prodoct. However, all ofthese references fail to meet my objectives because of inadequate equipment, but even more important, the application of too much energy and force. This results in the formation of too much fine particulate matter from the bracts, bractcoles and strig, which are then not separable from the lupulin by the methods of the inventors. Consequently, the products obtained do not have a very high alpha acid content.

The British Patent 1,166,386 to Wolton cools hops with inert liquified gas. No alpha acids or enrichment factor is stated, but only reference to "hipulin rich" and "lupulin poor" fractions. A low temperance lupulin separation process is needed that economically and efficiently separates lupulin glands from hop cones.

### SUMMARY OF INVENTION

The invention provides a method and apparatus for the physical separation af hipulin from hops. This invention simulates a natural process, which relates to the reason for the existence of lupulin in hops. The process of this invention simulates the natural process for the release of lupulin by drying, freezing, and shaking but at a greatly accelerated rate, under specific and controlled conditions.

According to the invention, a substantially cylindrical coarse screen is provided. The coarse screen includes a hops input end and a coarse waste output end. A raw hops product is receivable into the coarse screen, proximate the hops input end. The raw hops product is separable into a coarse lupulin fraction and a coarse waste. The coarse screen allows the coarse lupulin fraction to pass through it while the coarse waste is retained within the coarse screen, so that the coarse waste can be discharged out of the coarse waste output end of the coarse screen.

Additionally, a substantially cylindrical fine screen is also provided that is concentrically and externally positioned in relation to the coarse screen. The fine screen has a larger diameter than the coarse screen, enclosed within. The fine screen also includes a fine waste output end. The coarse lupulin fraction is separable into a lupulin product and a fine waste. The coarse lupulin fraction is receivable into the fine screen. The fine screen allows the lupulin product to pass through the fine screen while the fine waste is retained within the fine screen, so that the fine waste can be discharged out of the fine waste output end of the fine screen.

Additionally, a shaft can be positioned within said coarse screen. The shaft holds the coarse screen and the fine screen in relative concentric positions about the shaft. An agitator is mounted to the shaft and is utilized to beat the raw hop product. This action dislodges the coarse lupulin fraction from the raw hop product. The agitator includes a minimum of a single agitator bar, but can alternatively include a multiple of agitator bars.

Also, a bin is provided for receiving the lupulin product from the fine screen. The bin is positioned beneath the fine screen to capture the lupulin product as it falls from the fine screen. Alternatively, a gate can also be mounted within the bin. The gate can adjustably segregate the lupulin product into a first grade product stream and a second grade product stream.

Also alternatively, the separator can include a downward tilt. The downward tilt inclines the coarse screen from the hops input end, down to the coarse waste output. The fine-screen is also inclined in a similar downward direction to the fine waste output end.

According to one aspect of the invention, the separation process provides high yield without sacrificing purity of product as compared to other physical separation processes. Additionally, the yield and purity of the process of the present invention compares closely to the yield and purity achieved by conventional chemical extraction methods. Specifically, the present invention provides a concentrate of the alpha acids by means of a physical separation process which yields a product comparable to solvent extraction processes in yield and alpha acid content.

A valuable aspect of the present invention is the elimination of the customary baling process in which the loose hops are highly compressed into bales to reduce the volume for shipping and storage. By eliminating the bale process, the lupulin gland damaging compression is also avoided. Gently separating the lupulin glands, substantially intact, and storing the lupulin in drums with an oxygen barrier film lining, prevents the loss of alpha acids, with consequent substantial economic savings. Most of the typical losses in alpha acids, due to damage to the lupulin glands received in baling and subsequent oxidation in storage, are avoided by the process of the present invention.

According to another aspect ofthe invention, the novel process ofthe present invention could either be implemented by the grower, as an auxiliary of existing drying operations, or at centralized locations readily accessible to a number of growers in a specific regional area. Therefore, the need for separate, specialized facilities dedicated to hop pelletization and extract production can be eliminated.

A further aspect of the present invention is that the hops are broken up in a relatively gentle procedure that is adequate to dislodge the lupulin, and thereby minimizes the formation of small particles of cellulosic material.

In a related advantage ofthe present invention the separator ofthe present invention processes the hop in a continuous flow with a relatively small amount of material flowing quickly through the separator, unlike conventional batch sifting operations where the lupulin has to work its way downward through a large mass of material before it can pass through the screen.

Another advantage of the invention is the achievement of the above aspects to realize the benefits of storage and shipping savings, convenience, package stability, utilization and other benefits relating to the superior qualities of lupulin produced by the present invention as compared to pelletized hops or baled raw hops. Lupulin can be substituted for hop extracts produced by conventional methods, and therefore a very large price advantage can then be realized.

The savings in accessory functions associated with hop extraction, such as baling, transportation, inspection and warehousing, could offset the processing cost incurred in the present invention. The additional costs incurred by the process of the present invention would be minimal in view of the offsetting reductions in these accessory functions. Conceivably, the implementation of the process of the present invention could result in a considerable savings, especially compared to the labor and storage costs involved in the production of raw baled hops or pelletized hop products.

As an example, reusable steel drums could replace baling. One drum of lupulin manufactured by the process of the present invention would be the equivalent of five or six conventional bales of hops. This feature would reduce the volume ofmaterial to be hauled and warehoused by about 85%. Additionally, the critical environmental storage conditions required by conventionally stored hop bales would be substantially eliminated. The lupulin would not require special ventilation. The steel drums can better withstand structural fires as compared to baled hops. Fire and storage damage insurance would be reduced to a minimum for the containerized and non-perishable lupulin.

For the lupulin, an additional saving would be realized in the elimination of leaf, seed and stem inspection and analysis. Baled hops require such inspection to grade and certify that the hop cones are free from defects and properly processed after harvest. The lupulin could be inspected far more easily, with objective, automated and standardized laboratory analysis, rather than subjective, labor intensive inspections by hand.

Significantly, both the pelleting of hops and conventional extraction processing would likely become obsolete, if an efficient and economical process that resulted in the separation of lupulin from hop cones were realized. The efficient and economical separation process could supplant pelletization and subsequent extraction processes.

In addition to facilitating the separation of the lupulin, the partial drying of the hops followed by freezing has a beneficial effect on the quality of the lupulin. It is well known that heat is detrimental to the brewing quality of hops. In the process of this invention, the exposure to heat is minimized because the evaporation of the water content in the early stages of the drying hop cones keeps the temperature down. The partially dried hop cones move into the freezing section before they reach the higher temperature encountered in conventional kiln drying. Damage to the heat-sensitive aromatic and flavor components of the hop cones is thereby minimized.

Yet another advantage of this invention is the reduction of unwanted materials that otherwise go into the brew. Baled hops, hop pellets and some extracts are major sources of nitrates in beer. Nitrates in food products are undesirable because they undergo changes to nitrosamines, which are carcinogenic. Most of the nitrate content of hops resides in the vegetative part of the hop cone and there is very little in the lupulin. By separating and using the lupulin to hop the brew the introduction of nitrates is vastly reduced. A similar situation exists with respect to pesticides which are used to control diseases and insects which frequently attack the hop crop. The chemical sprays which are used to control these pests fall mainly on the exterior surfaces of the hop cone, the bracts and bractcoles, while the lupulin is sheltered by being up inside the hop cone near the base ofthe bracts. Consequently, separating the lupulin and discarding the bracts and bractcoles greatly reduces the addition of these unwanted materials. These residues are of grave concern to the brewer, and the availability of lupulin to reduce this problem would be a welcome addition to brewing technology.

There are also some environmental benefits from this invention. Currently the drying of the hops on the kiln at nearly an hop farms is done with heat generated by burning fuel oil, and the drying of abed of hops 76cm (30 inches) thick takes approximately eight hours. With the present invention the hops are only partially dried, which takes a fraction of the time, and there is a substantial saving in fuel oil usage, and consequent emission of combustion gasses. Freezing of the hops, which follows the partial drying, uses electrical energy, and the energy requirement to freeze a unit weight of water is only 15% of the energy required to evaporate it. In addition, the extraction of hops, whether with hexane, carbon dioxide or other solvent, inevitably results in the release of some of the solvent vapors into the atmosphere.

Another environmental benefit from this invention is the disposition of the waste after separating the lupulin. In current hop harvesting the hops are stripped from the vines. The vines then pass through a chopper which converts them to what is called "chopper waste". This waste is often spread on the hop fields. In the present invention, the waste from the lupulin separation, which represents about 75% of the hop cones, can be combined with the chopper waste and returned to the fields for its additional mulch and fertilizer value.

### BRIEF DESCRIPTION OF DRAWINGS

Fig. 1 is a photographic sectional view of atypical hop cone;
Fig. 2 is a perspective view of atypical hop cone's lupulin gland;
Fig. 3 is a schematic of a process for separating lupulin from hops, according to an embodiment of this invention;
Fig. 4 is a perspective view of a lupulin separator, according to an embodiment of this invention;
Fig. 5 is a side view of a lupulin separator, according to an embodiment of this invention;
Fig. 6 is a sectional end view of a lupulin separator, taken along section line 6-6 of Fig. 5, according to an embodiment of this invention;
Fig. 7 is a sectional end view of a lupulin separator, taken along section line 7-7 of Fig. 5, according to an embodiment of this invention;
Fig. 8 is a sectional end view of a lupulin separator, similar to the section of Fig. 5, alternatively including longitudinal flutes, according to an alternative embodiment of this invention; and
Fig. 9 is a sectional end view of a lupulin separator, similar to the section of Fig. 5, alternatively including longitudinal baffles, according to an alternative embodiment of this invention.

### DETAILED DESCRIPTION OF SPECIFIC EMBODIMENTS

The invention provides an improved process and apparatus for a highly efficient separation of the brewing value of hops in the form of lupulin, without the utilization of solvent extraction techniques.

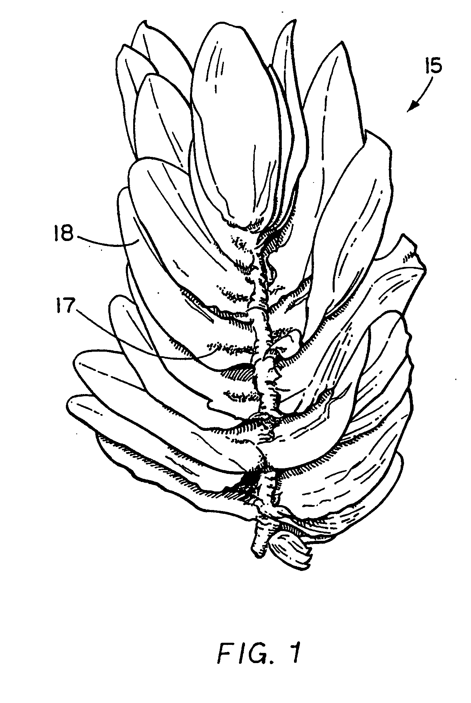

Fig. 1 shows a sectioned view of a typical mature hop cone 15. The hop cone includes small glands of lupulin 17, which are primarily attached to a bract or a bractole 18, as shown. The hop cone shown in Fig. 1 is described as sectioned because some of the bracts and bractoles have been 15 removed to better reveal the lupulin glands. As previously stated herein, lupulin is comprised of substantially all the essential oils and resins that are desired for brewing beer and as raw materials in the manufacture of beer flavorings.

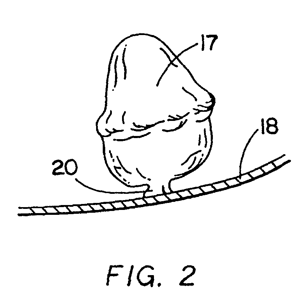

Fig. 2 shows an individual gland of lupulin 17 attached by a short fragile stem 20 to the bractole 18. To separate the lupulin from the hop cone 15 the fragile stem must first be broken to release the gland.

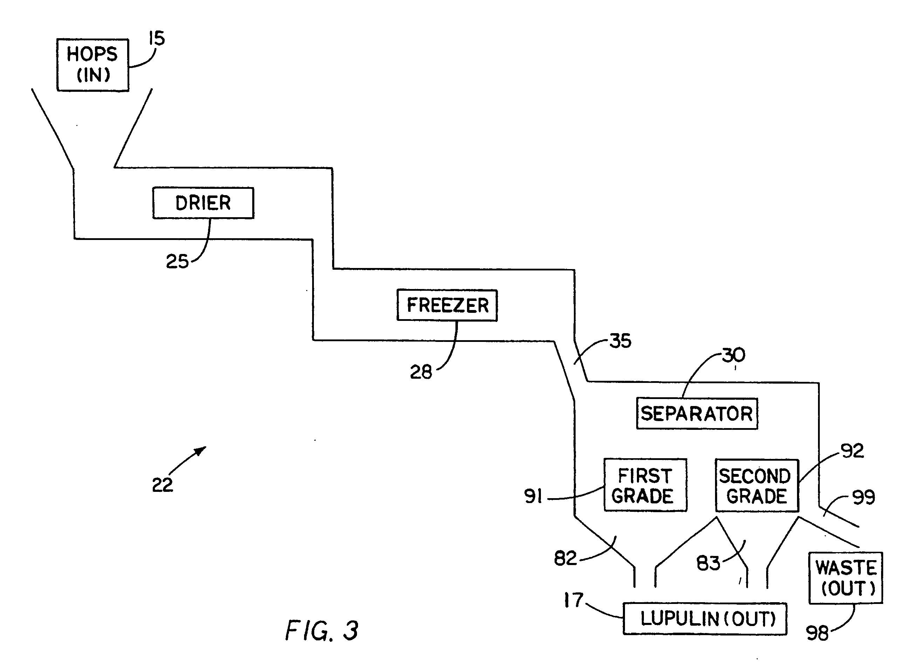

As shown in a schematic representation of the lupulin 17 separation process 22 of the present invention in Fig. 3 a drier 25 is a first step in achieving a highly effcient lupulin separation. Hop cones 15 that have been harvested and stripped from their vines with conventional methods are fed into the drier, where They are preferably dried in a continuous, steady state process, such as with a belt drier.

Continuous belt driers are commonly employed in material processing. The inventor loads the hops, which primarily include the hop cones and incidental waste materials, into a continuous belt in a shallow layer, about four or five inches (10 to 13 cm) in depth. Preferably, the hop cones drop from the end of the heated tunnel structure of the belt drier in a finished condition at above approximately 8% moisture. Most preferably, the hop cones are dried between about 20% to 50% moisture.

The hop cones dried in the preferred belt drier open up like a fully blooming flower. For conventional hop processing techniques the dried hop cones quickly fall apart in subsequent handling. This fragile quality is highly undesirable for further processing by these standard methods and so, belt dried hops would be rejected by brewers as being broken and "chaffy".

However, the belt drier quite satisfactorily produces dried hop cones for use in the process ofthe present invention. Most preferably, the present invention utilizes a dried hop cone that readily breaks apart. The belt drier is ideal for producing hop cones that can be further processed to expel their glands of lupulin **17**.

As shown schematically in Fig. 3, after drying the hops in the drier **25**, the hops pass into a freezer **28**. Like the drier, the freezer is also preferably a continuous, steady state processing device, such as a freezing tunnel. The freezing tunnel is maintained at approximately 20 degrees F (-7 °C), or lower. Freezing tunnels that employs the flash expansion of liquid carbon dioxide as a refrigerant, such as those designed by Carbonic Systems, Inc. of Elmira, NY, USA, are commonly employed in material processing. Therefore, the details of their construction are not considered a part of the present invention. However, the application of freezing tunnels to hops in- this instance is an important aspect of the present invention.

In addition to facilitating the separation ofthe lupulin, the partial drying of the hops **15** in the dryer **25** followed by freezing in the freezer **28** has a beneficial effect on the quality of the lupulin **17**. It is well known that heat is detrimental to the brewing quality of hops. In the process of this invention, the exposure to heat is minimized because the evaporation of the water content in the early stages of the drying hop cones keeps the temperature down. The dried hops move into the freezing section before they reach the higher temperature encountered in conventional kiln drying. Damage to the heat-sensitive aromatic and flavor components of the hops is thereby minimized.

As also shown in Fig. 3, after the dryer **25** and freezer **28** operations, the hop cones 15 pass into a separator **30**. The separator is specially configured to separate the lupulin glands **17** from the hop cones. The separator has a novel design, which is detailed herein as part of the present invention.

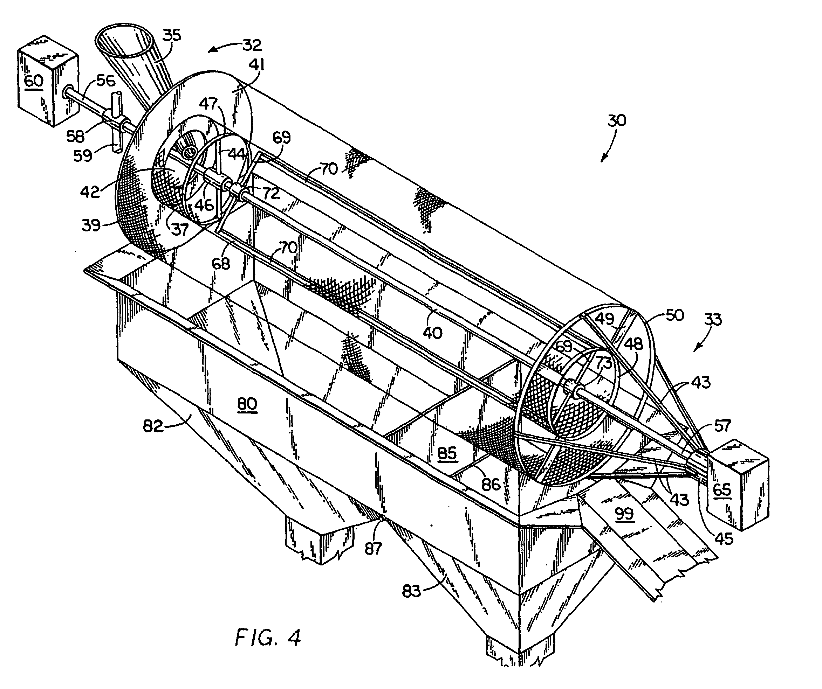

The separator **30**, as detailed according to a preferred embodiment of the present invention in Figs. 4 through 7, is generally cylindrical and includes a hops input end **32** and a waste output end **33**. The hop cones **15**, as schematically shown in Fig. 3, are loaded into the separator down a chute **35** which conveys the hop cones onto a coarse screen **37**. The chute is preferably configured to direct the hop cones onto the coarse screen without plugging, bridging or binding within the chute. The coarse screen is a substantially cylindrical sieve and includes a coarse input end rim **47** and a coarse output end rim **48**. The coarse screen has a diameter of approximately 5 to 7 feet (1.5 to 2 m) and is approximately 10 to 20 feet (3 to 6 m) in length. As most preferred, the sieve of the coarse screen is fabricated from conventional, woven wire cloth but could be fabricated of any conventional screen material having approximate sieve openings of 0.5 inches (12.7 mm) to 0.25 inches (6.4 mm).

As shown in Figs. 4 through 7, the coarse screen **37** is concentrically configured within a fine screen **39** having a larger diameter. Similar to the coarse screen, the fine screen is a cylindrical sieve that includes a fine input end rim **49** and a fine output end rim **50**. The coarse screen and the fine screen are attached to and together rotate about a common shaft **40**. As with the coarse screen, the fine screen is also preferably a conventional, woven wire cloth but could be fabricated of any conventional screen material having approximate sieve openings of 0.012 inches (0.3 mm), which corresponds to approximately 48 mesh (Tyler Standard).

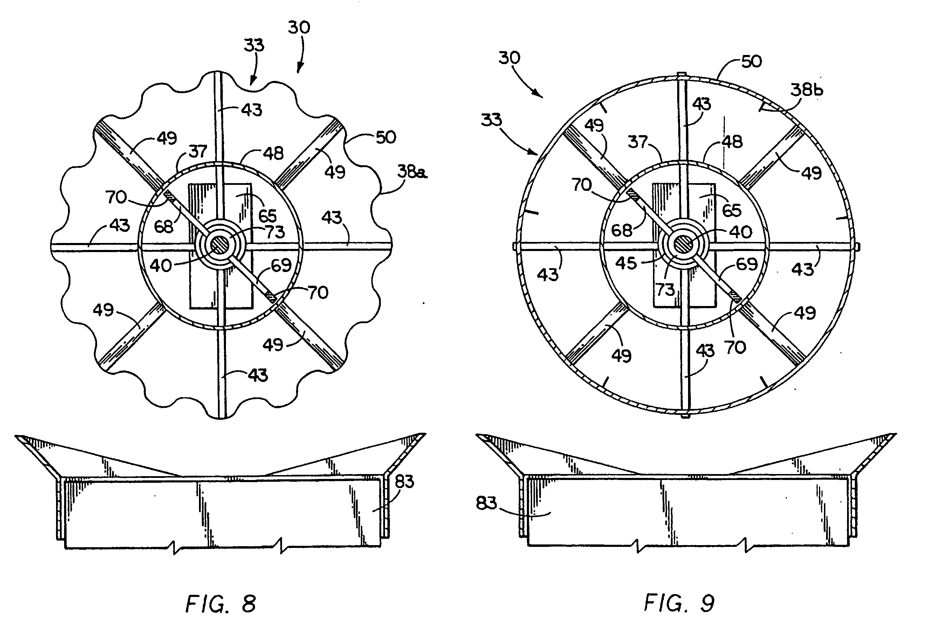

The fine screen **37** of the separator **30** can alternatively include a corrugated surface **38a**, as detailed in Fig. 8, to cause the hops **15** to ride up higher on the ascending curve of the screen before the hops roll back down again. This action continually replaces the hop material at the screen surface and so helps to dislodge the lupulin **17** from the hops. A comparable effect can be obtained by alternatively placing longitudinal baffles **38b** in the screen, as detailed in Fig. 9.

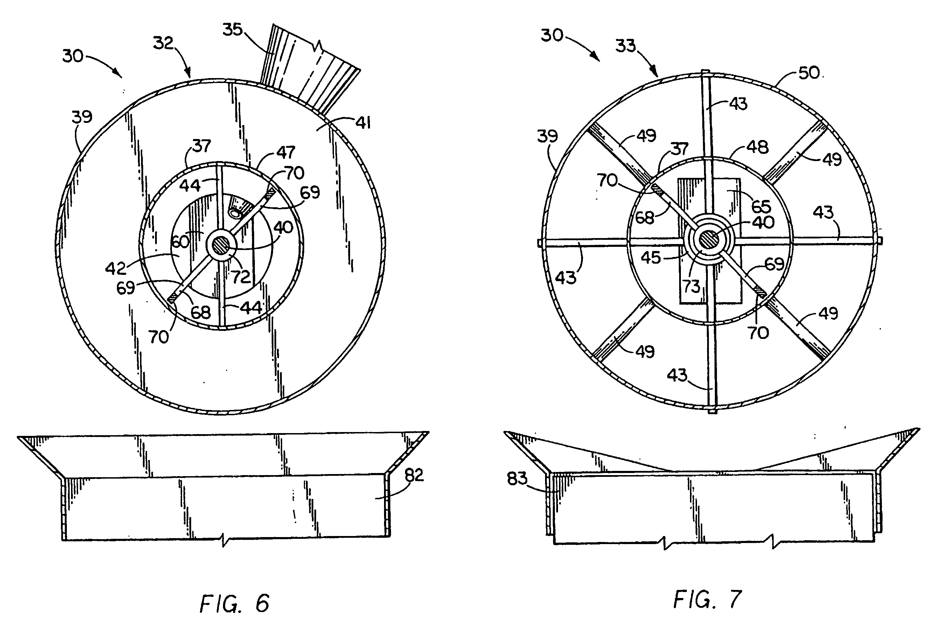

As shown in Figs. 4 and 6, at the hops input end **32** of the separator **30**, the fine screen and the coarse screen **37** are held in relative concentric positions about the shaft **40** by both being attached to an end plate **41**. The end plate includes an end plate opening **42** for receiving the chute **35** into the coarse screen. The coarse input end rim **47** of the coarse screen is supported from shaft by a plurality of coarse screen spokes. Preferably, two coarse screen spokes **44** are utilized, as shown in Figs. 4 and 6. The coarse screen spokes attach to an interior bearing **46**, which rotates freely on the shaft. The interior bearing is preferably mounted to the shaft at a position proximate the hop input end, most preferably at a location on the shaft that maintains clearance of the coarse screen spokes from the chute **35**.

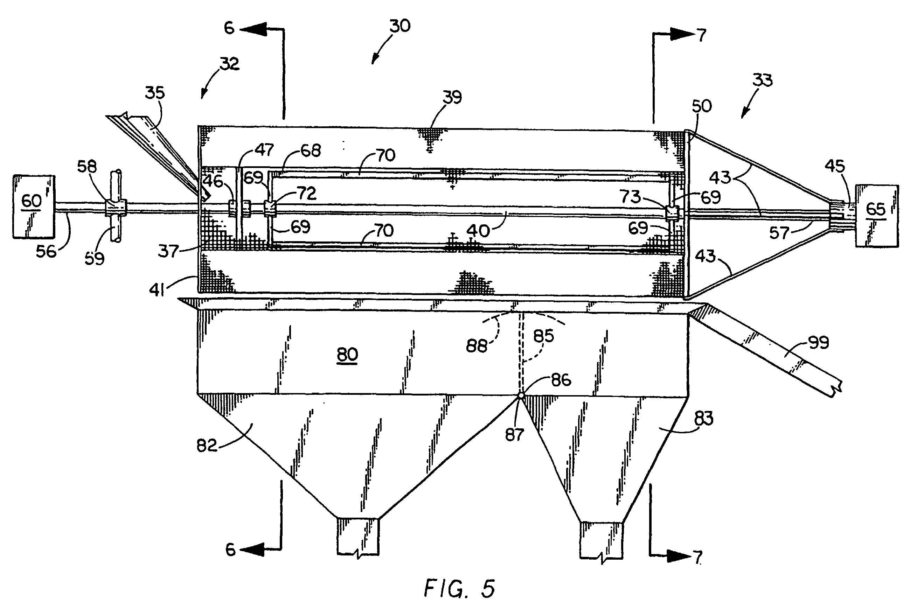

At the waste output end **33** of the separator **30**, the fine screen **39** and the coarse screen **37** are held in relative concentric positions about the shaft **40** by a series of spokes. As shown in Figs. 4 and 5, a set of rotational spokes **43** extend from a hollow hub **45**. The hollow hub is preferably positioned on the shaft, proximate the waste output end of the separator. The hollow hub acts as a bearing for the shaft to rotate independently within. Each of the rotational spokes extend from the hollow hub and each extend radially to attach to the fine output end rim **50**. Additionally, a set of fine screen connector spokes **49** connect the coarse output end rim **48** to the fine output end rim. Preferably, four fine screen connector spokes, spaced evenly about the waste output end of the separator are utilized.

As also shown in Figs. 4 and 5, the shaft **40** runs from a first end **56** to a second end **57**. The first end of the shaft preferably extends out beyond the end plate **41** at the hop input end **32** of the separator. The second end preferably extends out beyond the fine output end rim **50** at the waste output end **33** of the separator. The shaft is preferably supported at the hops input end by an input end bearing **58.** The input end bearing is preferably a point of attachment to a structural support **59**. The structural support is most preferably a member of a frame (not shown), which supports the entire separator.

The shaft **40** of the separator **30** is rotationally driven by a first motor **60**. The first motor can be hydraulic, as preferred, or any conventional electric, pneumatic, internal combustion, or belt driven alternative. As shown in Figs. 4 and 5, the first motor is preferably located proximate the first end **56** of the shaft.

The rotation of the shaft **40** is independent to the rotation of the coarse screen **37** and the fine screen **39**. As shown in Figs. 4 through 7, an agitator **68** is mounted to the shaft. The agitator includes at least a single agitator bar, but preferably includes a plurality of agitator bars **70**. Most preferably, as shown in Fig. 4, a pair of agitator bars are utilized.

The agitator **68** also includes a plurality of agitator spokes **69**. The agitator spokes extend in a radial direction from the shaft, connecting the actuator bars **70** to a first agitator hub **72**, or to a second agitator hub **73**. Both the first hub and the second hub are positioned on the shaft, the first agitator hub preferably located proximate the hop input end **32** of the separator **30** and the second agitator hub preferably located proximate the waste output end **33** of the separator.

The agitator **68** passes through the coarse screen **37**. The agitator may be rotated in either direction by the shaft **40** and usually at a higher rotational speed than the coarse screen and the fine screen **39**, which are preferably interconnected. The fine screen and the coarse screen rotate in unison by means of a common second motor **65**. Similar to the first motor, the second motor can be hydraulic, as preferred, or any conventional electric, pneumatic, internal combustion, or belt driven alternative. As shown in Figs. 4 and 5, the second motor is preferably located proximate the second end **57** of the shaft. Hydraulic drive motors are preferred since they generate little heat and can deliver high torque at slow speeds. The speeds of the hydraulic motors are easily regulated and their direction of rotation is typically reversible.

Additionally, the rotational speeds of the agitator bars **70**, and also of the interconnected coarse screen **37** and the fine screen **39**, are preferably variable by means of a speed control on the first drive motor for the agitator bars and the second motor for the coarse screen **37** and the fine screen.

Preferably, as shown in Figs. 4, 5, and 7, the second end **57** of the shaft **40** terminates within the hollow hub **45** and a second motor **65** is attached to the hollow hub. The second end **57** of the shaft **40** is preferably supported within the hollow hub **45** so that the shaft can rotate independently of the hollow hub.

As also shown in Figs. 4 and 5, a collection hopper **80** is located substantially beneath the entire length of the fine screen **39** of the separator **30**. To further segregate the products from the fine screen, plurality of bins preferably comprise the collection hopper. Most preferably, a first grade bin **82** is located substantially beneath the input end **32** of the separator and a second grade bin **83** is located near the output end **33** of the separator.

Additionally, in the preferred embodiment as shown in Fig. 4, a gate **85** is utilized to adjust the relative lupulin **17** composition output of the separator **30** into of a lupulin rich fraction, or first grade **91** that falls into the first grade bin **82** and a second grade **92**, which is lower in lupulin, and falls into the second grade bin **83**. This segregation of the lupulin output streams is shown schematically in Fig. 3.

The gate **85** also includes a hinge **86** that is attached to the collection hopper **80** as shown in Figs. 4 and 5. The hinge can also include a hinge end extension **87**. With a conventional turning wheel (not shown) attached to the hinge end extension, the gate can be moved along a gate path **88**, shown in Fig. 5, by an operator's manual rotation of the turning wheel. Alternatively the gate can be moved along the gate path by a conventional motor drive (not shown) preferably attached to the hinge end.

To fine tune a cut-off point for a division between the first grade **91** and the second grade **92**, the operator of the separator **30** can swing the gate **85** to a selected position along the gate path **88**, either toward the first grade bin **82** or the second grade bin **83**. The operator can thereby deflect a selected portion of the separator product stream into either of the two collection bins. This selected cut-off point may vary from batch to bach of hops **15** processed, and depend on several factors, such as the variety of the hop, the purity of the desired product, the growth conditions of the hop, the harvest methods and variations in the processing ofthe hops, including the operation ofthe separator.

To facilitate flow of the hops through the separator **30**. The separator is preferably mounted in a frame (not shown). At a minimum, the frame is preferably attached to the structural support **59** at the hop input end **32** and the housing for the second motor **65** at the waste output end **33** of the separator.

Preferably, the operator can also tilt the separator **30** at a selected angle. The selected angle is preferably a downward tilt, inclined from the hops input end **32** down to the waste output end **33**. The hops **15**, as they are processed by the separator move by gravity from the hops input end to the waste output end. The coarse hop material that fails to fall through the coarse screen is a waste **98**, as shown schematically in Fig. 3. Besides the coarse hop material, the waste also includes finer material that falls through the coarse screen but fails to fall through he fine screen. The waste exits the waste output end of the separator via a waste chute **99**. Also preferably, the waste chute deposits the waste in a storage bin for further processing utilization as a process by-product.

Alternatively, a second separator can be operated in tandem with the separator **30**, as above described. The second separator (not shown) could process the waste **98** from the separator and obtain additional small quantities of lupulin therefrom. The coarse screen of the second separator would preferably be smaller in opening size than the coarse screen **37** of the separator.

The operation of the separator is simple and efficient. From the chute **35** at the hop input end **32** of the separator **30**, the hop cones fall into the coarse screen **37**. With the oppositely rotating agitator **68**, the hop cones **15** are gently agitated to dislodge the lupulin **17**, as the hop cones move at a slight downward incline through the cylindrical coarse screen toward the waste output end **33** of the separator. Along the length of the rotating coarse screen the lupulin, with other smaller components of the hop cones, fall through the coarse screen and onto the fine screen. The waste **98** that remains within the coarse screen travels down the length ofthe coarse screen to the waste output end. The depleted, substantially lupulin free, hop material spills out of both fine and coarse screens to a waste chute **99**, also at the waste output end. The waste can be conveyed either to a second separator or to waste.

The lupulin separation process **22** ofthe present invention, is designed to be gentle, compact and have a minimum of components. Transfers and conveyance of hops **15**, lupulin **17** or waste **98** throughout, is preferably accomplished by gravity wherever practical. The separator **30** ofthe present invention achieves the breakup of the hops with no more force than is necessary to dislodge the lupulin, and thereby minimizes the formation of small particles of cellulosic material. Upon introduction of the hops at the hop input end **32** there is a rapid release of lupulin which quickly passes through the coarse screen **37** and through the fine screen **39** into the collection bin **80** without the impediment ofthe waste **98**, non-lupulin hop material. This feature is a distinct improvement over conventional, physical separation techniques that rely on batch methods or large scale "trickle-down" sieve configurations to separate lupulin from hops. As the hops move forward along the coarse screen, there is a, secondary and more gradual passage of lupulin intermixed with finer hop material through the coarse screen.

The configuration of the present invention provides for gradual passage of the hop **15** and lupulin **17** material so that the fine screen **39** is not overloaded, unlike batch sifting operations where the lupulin has to work its way downward through a large mass of material before it can pass through a screen.

As an additional, optional process step, the waste **98** emerging from the separator **30** can be fed into a second, similar separator (not shown), usually with a coarse screen of smaller mesh, and a second lupulin yield obtained therefrom.

As the separator **30** operates, the hops **15**, including lupulin **17** that fall through the coarse screen **37** form small particles. These small particles slide and roll down the inside surface of the fine screen **39**. This sliding and rolling comprises a brushing action that helps keep the fine screen clean and open. Although the hops decompose into some broken and fibrous materials that also pass through the coarse screen together with the lupulin, this broken and fibrous material remains on the fine screen, while the glands of lupulin, passes trough the fine screen in a relatively clean and in a substantially unbroken condition for collection in the collection hopper 80, below.

With the present invention, lupulin 17 can be obtained as a product with exceptional purity and at a high degree of efficiency. Typically, more than 85% of the lupulin contained in the unprocessed hop cones 15 can be recovered by the process of the present invention. Additionally, depending on the alpha acid content of the hop cones processed, a lupulin product with purity of more than 30% can typically be achieved, even in commercial hop varieties exhibiting low alpha acid content. The higher alpha acid hop varieties can typically be processed by the process of the present invention to a purity of greater than 40%, all while maintaining the lupulin recovery efficiency of greater than 85%.

## Claims

1. A separator apparatus for obtaining lupulin from hop cones, which comprises:
a cylindrical, coarse screen,
said coarse screen having sieve openings between 12.7 mm and 6.4 mm, (0.5 and 0.25 inches) and
said coarse screen including a hops input end and a coarse waste output end;
a raw hops product primarily composed of the hop cones and an individual waste material,
said raw hop product receivable into said coarse screen, at the hops input end, said raw hops product separable into a coarse lupulin fraction and a coarse waste, said coarse lupulin fraction including the lupulin and a fine waste material,
and
said coarse screen for passing the coarse lupulin fraction through said coarse screen while retaining the coarse waste for discharging out of the coarse waste output end of said coarse screen; and
a cylindrical fine screen concentrically and externally positioned relative to said coarse screen,
said fine screen having a larger cross-sectional diameter than said coarse screen and said fine screen having a fine waste output end,
said fine screen having sieve openings of approx. 0.3mm (0.012 inches) and the coarse lupulin fraction separable into a lupulin product and a fine waste, said lupulin product including the lupulin from the hop cones,
the coarse lupulin fraction receivable into said fine screen, and
said fine screen for passing the lupulin product through said fine screen while retaining the fine waste for discharging out of the fine waste output end of said fine screen.

2. The separator apparatus of claim 1, further comprising:
a shaft positioned within said coarse screen,
said shaft for holding and said coarse screen and said fine screen in relative concentric positions about said shaft, and
an agitator mounted to said shaft, said agitator including a minimum of a single agitator bar,
said agitator bar for bearing said raw hop product to dislodge the coarse lupulin fraction therefrom.

3. The separator apparatus of claim 1, further including a bin for receiving the lupulin product from the fine screen.

4. The separator apparatus of claim 3, further comprising:
a gate mounted in said bin for adjustably segregating the lupulin product into a first grade product stream and a second grade product stream.

5. The separator apparatus of claim 1, wherein:
said separator includes a downward tilt,
said downward tilt for inclining said coarse screen from the hops input end,
down to the coarse waste output, and for inclining said fine screen downward to the fine waste output end.

6. The separator apparatus of claim 1, wherein said fine screen has longitudinal baffles.

7. The separator apparatus of claim 1, wherein said fine screen has longitudinal corrugations.

8. A separation process for obtaining lupulin from hop cones, the process including the steps of
a) harvesting hop cones, the hope cones having a lupulin rich fraction, and the hop cones including an alpha acid concentrated in the hop cones;
b) drying the hop cones;
c) freezing the hop cones;
d) separating the lupulin rich fraction from the hop cones in the mechanical separator of any one of claims 1 to 7;
e) obtaining a yield of the lupulin rich fraction, wherein the lupulin rich fraction includes more than 85% of the alpha acid originally present in the hop cones; and
f) obtaining a purity of the lupulin rich fraction, wherein more than 30% of the lupulin rich fraction is the alpha acid.

9. The separation process for obtaining lupulin from hop cones, as recited in claim 8 wherein the hop cones are dried to a moisture content of above 8%.

10. The separation process for obtaining lupulin from the hop cones, as recited in claim 8 wherein the hop cones are dried to a moisture content between 20% to 50%.

11. The separation process for obtaining lupulin from hop cones, as recited in claim 8, wherein the hop cones are dried to a moisture content between 20% to 50% in a belt drier.

12. The separation process for obtaining lupulin from hop cones, as recited in claim 8, wherein the hop cones are dried to a moisture content of between 20% to 50% in a kiln drier.

13. The separator process for obtaining lupulin from hop cones, as recited in claim 8, wherein the hop cones are frozen to a temperature of -7°C (20°F) or lower.

## Patentansprüche

1. Trennvorrichtung zur Gewinnung von Lupulin aus Hopfenzapfen, welche umfasst:
einen zylindrischen Grobsortierer,
wobei der Grobsortierer Sieböffnungen zwischen 12,7 mm und 6,4 mm (0,5 und 0,25 Zoll) aufweist und
der Grobsortierer ein Hopfeneingabeende und ein Grobabfallausgabeende umfasst;
ein Rohhopfenprodukt, welches in erster Linie aus Hopfenzapfen und einem individuellen Abfallmaterial besteht,
wobei das Rohhopfenprodukt am Hopfeneingabeende in den Grobsortierer aufnehmbar ist, das Rohhopfenprodukt in eine grobe Lupulinfraktion und einen groben Abfall trennbar ist, wobei die grobe Lupulinfraktion das Lupulin und ein feines Abfallmaterial enthält;
und
der Grobsortierer zum Durchlassen der groben Lupulinfraktion durch den Grobsortierer bei Zurückhalten des groben Abfalls zum Ausstoßen aus dem Grobabfallausgabeende des Grobsortierers ist; und
einen zylindrischer Feinsortierer, welcher in Bezug auf den Grobsortierer konzentrisch und extern angeordnet ist,
wobei der Feinsortierer einen größeren Querschnittdurchmesser als der Grobsortierer aufweist und der Feinsortierer ein Feinabfallausgabeende aufweist,
der Feinsortierer Sieböffnungen von ungefähr 0,3 mm (0,012 Zoll) aufweist, und die grobe Lupulinfraktion in ein Lupulinprodukt und einen feinen Abfall trennbar ist, wobei das Lupulinprodukt das Lupulin der Hopfenzapfen enthält,
die grobe Lupulinfraktion in den Feinsortierer aufnehmbar ist, und
der Feinsortierer zum Durchlassen des Lupulinprodukts durch den Feinsortierer bei Zurückhalten des feinen Abfalls zum Ausstoßen aus dem Feinabfallausgabeende des Feinsortierers ist.

2. Trennvorrichtung nach Anspruch 1, ferner umfassend:
eine Welle, welche innerhalb des Grobsortierers angeordnet ist,
wobei die Welle den Grobsortierer und den Feinsortierer in relativen konzentrischen Positionen um die Welle hält; und
ein Rührwerk, welches an der Welle angebracht ist, wobei das Rührwerk mindestens eine einzige Rührstange umfasst,
die Rührstange zum Drücken des Rohhopfenprodukts ist, um die grobe Lupulinfraktion davon zu verdrängen.

3. Trennvorrichtung nach Anspruch 1, welche ferner einen Behälter zur Aufnahme des Lupulinprodukts aus dem Feinsortierer umfasst.

4. Trennvorrichtung nach Anspruch 3, welche ferner umfasst:
ein Gatter, welches im Behälter zum einstellbaren Aussondern des Lupulinprodukts in einen Produktstrom ersten Grades und einen Produktstrom zweiten Grades angebracht ist.

5. Trennvorrichtung nach Anspruch 1, wobei:
die Trennvorrichtung eine Abwärtsneigung umfasst,
die Abwärtsneigung zum Neigen des Grobsortierers vom Hopfeneingabeende nach unten zum Grobabfallausgabeende und zum Neigen des Feinsortierers abwärts zum Feinabfallausgabeende ist.

6. Trennvorrichtung nach Anspruch 1, wobei der Feinsortierer Ablenkbleche in Längsrichtung aufweist.

7. Trennvorrichtung nach Anspruch 1, wobei der Feinsortierer Längswellen aufweist.

8. Trennverfahren zur Gewinnung von Lupulin aus Hopfenzapfen, wobei das Verfahren die folgenden Schritte umfasst:
(a) Ernten von Hopfenzapfen, wobei die Hopfenzapfen eine lupulinreiche Fraktion aufweisen und die Hopfenzapfen eine Alphasäure enthalten, welche in den Hopfenzapfen konzentriert ist;
(b) Trocknen der Hopfenzapfen;
(c) Gefrieren der Hopfenzapfen;
(d) Trennen der lupulinreichen Fraktion von den Hopfenzapfen in der mechanischen Trennvorrichtung nach einem der Ansprüche 1 bis 7;
(e) Gewinnen eines Ertrags der lupulinreichen Fraktion, wobei die lupulinreiche Fraktion mehr als 85 % der Alphasäure enthält, welche ursprünglich in den Hopfenzapfen vorhanden war;
und
(f) Gewinnen einer Reinheit der lupulinreichen Fraktion, wobei mehr als 30 % der lupulinreichen Fraktion die Alphasäure sind.

9. Trennverfahren zur Gewinnung von Lupulin aus Hopfenzapfen nach Anspruch 8, wobei die Hopfenzapfen auf einen Feuchtigkeitsgehalt von über 8 % getrocknet werden.

10. Trennverfahren zur Gewinnung von Lupulin aus Hopfenzapfen nach Anspruch 8, wobei die Hopfenzapfen auf einen Feuchtigkeitsgehalt von zwischen 20 % und 50 % getrocknet werden.

11. Trennverfahren zur Gewinnung von Lupulin aus Hopfenzapfen nach Anspruch 8, wobei die Hopfenzapfen in einem Bandtrockner auf einen Feuchtigkeitsgehalt von zwischen 20 % und 50 % getrocknet werden.

12. Trennverfahren zur Gewinnung von Lupulin aus Hopfenzapfen nach Anspruch 8, wobei die Hopfenzapfen in einem Trockenofen auf einen Feuchtigkeitsgehalt zwischen 20 % und 50 % getrocknet werden.

13. Trennverfahren zur Gewinnung von Lupulin aus Hopfenzapfen nach Anspruch 8, wobei die Hopfenzapfen auf eine Temperatur von -7 °C (20 °F) oder tiefer gefroren werden.

## Revendications

1. Appareil de séparation pour obtenir du lupulin à partir de cônes de houblon, lequel comprend :
un tamis grossier, cylindrique,
ledit tamis grossier ayant des ouvertures de maille comprises entre 12,7 mm et 6,4 mm, (0,5 et 0,25 pouce) et
ledit tamis grossier comprenant une extrémité d'entrée du houblon et une extrémité de sortie des déchets grossiers ;
un produit de houblon brut principalement composé des cônes de houblon et d'un matériau de déchets individuel,
ledit produit de houblon brut pouvant être reçu dans ledit tamis grossier, à l'extrémité d'entrée du houblon, ledit produit de houblon brut pouvant être séparé en une fraction de lupulin grossière et des déchets grossiers, ladite fraction de lupulin grossière comprenant le lupulin et un matériau de déchets fins,
et
ledit tamis grossier destiné à faire passer ladite fraction de lupulin grossière à travers ledit tamis grossier tout en retenant les déchets grossiers pour les décharger de l'extrémité de sortie des déchets grossiers dudit tamis grossier ; et
un tamis fin cylindrique positionné de manière concentrique et externe par rapport au dit tamis grossier,
ledit tamis fin ayant un diamètre transversal plus grand que ledit tamis grossier et ledit tamis fin ayant une extrémité de sortie des déchets fins,
ledit tamis fin ayant des ouvertures de maille d'approximativement 0,3 mm (0,012 pouces) et ladite fraction de lupulin grossière pouvant être séparée en un produit de lupulin et un déchet fin, ledit produit de lupulin comprenant le lupulin des cônes de houblon,
la fraction de lupulin grossière pouvant être reçue dans ledit tamis fin, et
ledit tamis fin étant destiné à faire passer le produit de lupulin à travers ledit tamis fin tout en retenant les déchets fins pour les décharger de l'extrémité de sortie des déchets fins dudit tamis fin.

2. Appareil de séparation selon la revendication 1, comprenant en outre :
une tige positionnée à l'intérieur dudit tamis grossier,
ladite tige étant destinée à maintenir ledit tamis grossier et ledit tamis fin dans des positions relatives concentriques autour de ladite tige, et
un agitateur monté sur ladite tige, ledit agitateur comprenant au minimum une barre d'agitation unique,
ladite barre d'agitation étant destinée à presser ledit produit de houblon brut de manière à expulser la fraction de lupulin grossière de celui-ci.

3. Appareil de séparation selon la revendication 1, comprenant en outre un réservoir destiné à recevoir le produit de lupulin du tamis fin.

4. Appareil de séparation selon la revendication 3, comprenant en outre :
une trappe montée dans ledit réservoir destinée à séparer de manière ajustable le produit de lupulin en un courant de produit de première qualité et un courant de produit de deuxième qualité.

5. Appareil de séparation selon la revendication 1, dans lequel :
ledit séparateur comprend une inclinaison vers le bas,
ladite inclinaison vers le bas étant destinée à incliner ledit tamis grossier de l'extrémité d'entrée du houblon, vers le bas vers l'extrémité de sortie des déchets grossiers, et destinée à incliner ledit tamis fin vers le bas vers l'extrémité de sortie des déchets fins.

6. Appareil de séparation selon la revendication 1, dans lequel ledit tamis fin a des déflecteurs longitudinaux.

7. Appareil de séparation selon la revendication 1, dans lequel ledit tamis fin a des ondulations longitudinales.

8. Procédé de séparation pour obtenir du lupulin à partir de cônes de houblons, le procédé comprenant les étapes consistant à :
a) récolter des cônes de houblon, les cônes de houblon ayant une fraction riche en lupulin, et les cônes de houblon comprenant un acide alpha concentré dans les cônes de houblon ;
b) sécher les cônes de houblon ;
c) congeler les cônes de houblon ;
d) séparer la fraction riche en lupulin des cônes de houblon dans le séparateur mécanique selon l'une des revendications 1 à 7 ;
e) obtenir un rendement de la fraction riche en lupulin, dans lequel la fraction riche en lupulin comprend plus de 85 % de l'acide alpha initialement présent dans les cônes de houblon ;
et
f) obtenir une pureté de la fraction riche en lupulin, dans laquelle plus de 30 % de la fraction riche en lupulin est de l'acide alpha.

9. Procédé de séparation pour obtenir du lupulin à partir de cônes de houblon, tel que décrit dans la revendication 8, dans lequel les cônes de houblons sont séchés à une teneur en humidité supérieure à 8 %.

10. Procédé de séparation pour obtenir du lupulin à partir de cônes de houblon, tel que décrit dans la revendication 8, dans lequel les cônes de houblon sont séchés à une teneur en humidité comprise entre 20 % et 50 %.

11. Procédé de séparation pour obtenir du lupulin à partir de cônes de houblon, tel que décrit dans la revendication 8, dans lequel les cônes de houblon sont séchés à une teneur en humidité comprise entre 20 % et 50 % dans un séchoir à courroie.

12. Procédé de séparation pour obtenir du lupulin à partir de cônes de houblon, tel que décrit dans la revendication 8, dans lequel les cônes de houblon sont séchés à une teneur en humidité comprise entre 20 % et 50 % dans un séchoir à four.

13. Procédé de séparation pour obtenir du lupulin à partir de cônes de houblon, tel que décrit dans la revendication 8, dans lequel les cônes de houblon sont congelés à une température de -7°C (20°F) ou moins.
